(19) Europäisches Patentamt
European Patent Office
Office européen des brevets

(11) **EP 4 129 477 A1**

(12) **EUROPEAN PATENT APPLICATION**
published in accordance with Art. 153(4) EPC

(43) Date of publication:
**08.02.2023 Bulletin 2023/06**

(21) Application number: **21779149.0**

(22) Date of filing: **28.01.2021**

(51) International Patent Classification (IPC):
**B01J 35/02** *(1974.07)*  **B01J 21/06** *(1974.07)*
**B01J 23/46** *(1974.07)*  **B01J 32/00** *(1985.01)*
**C01B 7/01** *(1974.07)*

(52) Cooperative Patent Classification (CPC):
**B01J 21/00; B01J 21/06; B01J 23/46; B01J 35/02;
C01B 7/01**

(86) International application number:
**PCT/JP2021/003003**

(87) International publication number:
**WO 2021/199633 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.04.2020 JP 2020066236**

(71) Applicant: **SUMITOMO CHEMICAL COMPANY,
LIMITED**
**Tokyo 103-6020 (JP)**

(72) Inventor: **MIKAMI, Yusuke**
**Niihama-shi, Ehime 792-8521 (JP)**

(74) Representative: **Global IP Europe
Patentanwaltskanzlei
Pfarrstraße 14
80538 München (DE)**

(54) **MOLDING CATALYST AND METHOD FOR PRODUCING HALOGEN**

(57) A molding catalyst satisfying the following formula (1):

$$0.800 \leq W_{AV}/W_C \leq 0.875 \quad (1)$$

wherein $W_{AV}$ is determined by the following formula (2) and $W_C$ is determined by the following formula (3):

$$W_{AV} = W_{tot}/n \quad (2)$$

wherein $W_{tot}$ is a total weight of freely-selected n pieces of the molding catalyst,

$$W_C = (V_{AV} \cdot \rho)/(1 + V_P \cdot \rho) \quad (3)$$

wherein $V_{AV}$ is an average of volumes of virtual cylinders each respectively having, as its height and diameter, a major axis (L) and a minor axis (D) of each of the freely-selected n pieces of the molding catalyst, $\rho$ is a true density of the molding catalyst, and $V_P$ is a pore volume per unit weight of the molding catalyst.

FIG. 2

EP 4 129 477 A1

**Description**

TECHNICAL FIELD

The present invention relates to a molding catalyst and a method for producing a halogen.

BACKGROUND ART

A fixed-bed multitubular reactor is known as an apparatus for producing a product, in which a reaction raw material is supplied to a plurality of reaction tubes packed with a catalyst. For example, Patent Document 1 discloses a method for producing chlorine by oxidizing hydrogen chloride in a fixed-bed multitubular reactor.

PRIOR ART DOCUMENT

PATENT DOCUMENT

Patent Document 1: JP-A-2010-052976

SUMMARY OF THE INVENTION

PROBLEMS TO BE SOLVED BY THE INVENTION

The technique disclosed in Patent Document 1 uses a molding catalyst formed into a cylindrical shape or the like as a catalyst packed in the reaction tubes of the fixed-bed multitubular reactor.

When a molding catalyst formed into a cylindrical shape is packed into reaction tubes, there is a case where the reaction tubes are different in packing state. That is, there is a case where some of the reaction tubes of a multitubular reactor are densely packed with the molding catalyst and some of them are roughly packed with the molding catalyst. Further, there is a case where the degree of denseness of the molding catalyst packed in the reaction tube changes every time when the molding catalyst packed in the reaction tube is replaced. Such a difference in the packing state of the molding catalyst packed in the reaction tube may be caused not only in the multitubular reactor but also in a monotubular reactor.

Such a difference in the packing state of the molding catalyst causes a difference in flowability of a reaction raw material among the reaction tubes so that a contact time between the reaction raw material and the molding catalyst varies. As a result, catalytic activity or reaction selectivity may be different among the reaction tubes of the multitubular reactor or may be changed every time when the catalyst in the monotubular reactor is replaced.

For this reason, there is a demand for development of a molding catalyst capable of reducing a difference in its packing state when packed into a reaction tube and a method for producing a halogen using the molding catalyst.

MEANS FOR SOLVING THE PROBLEMS

In order to solve the above problem, the present inventor has intensively studied, and as a result has found that the above problem can be solved by allowing the ratio of the average weight ($W_{AV}$) of a molding catalyst to a virtual cylinder weight (Wc) determined from the molding catalyst ($W_{AV}/W_C$, also referred to as a value A) to fall within a specific range. This finding has led to the completion of the present invention.

More specifically, the present invention provides the following.

[1] A molding catalyst satisfying the following formula (1) :

$$0.800 \leq W_{AV}/W_C \leq 0.875 \quad (1)$$

wherein $W_{AV}$ is determined by the following formula (2) and $W_C$ is determined by the following formula (3):

$$W_{AV} = W_{tot}/n \quad (2)$$

wherein $W_{tot}$ is a total weight of freely-selected n pieces of the molding catalyst,

$$W_C = (V_{AV} \cdot \rho)/(1 + V_P \cdot \rho) \quad (3)$$

wherein $V_{AV}$ is an average of volumes of virtual cylinders each respectively having, as its height and diameter, a major axis (L) and a minor axis (D) of each of the freely-selected n pieces of the molding catalyst,
$\rho$ is a true density of the molding catalyst, and
$V_P$ is a pore volume per unit weight of the molding catalyst.

[2] The molding catalyst according to [1], which is intended to be used for a multitubular reactor.
[3] The molding catalyst according to [1] or [2], which is used to oxidize a hydrogen halide with oxygen.
[4] A method for producing a halogen including obtaining a halogen using the molding catalyst according to any one of [1] to [3].

EFFECT OF THE INVENTION

According to the present invention, it is possible to provide a molding catalyst capable of reducing a difference in its packing state when packed into a reaction tube and a method for producing a halogen using the molding catalyst.

BRIEF DESCRIPTION OF THE DRAWINGS

Fig. 1 is a schematic diagram showing an example of a fixed-bed multitubular reactor.
Fig. 2 is a graph showing the relationship between a value A and the variability of apparent specific gravity of Examples and Comparative Examples.

MODE FOR CARRYING OUT THE INVENTION

Hereinbelow, the present invention will be described in detail with reference to embodiments and examples. However, the present invention is not limited to the embodiments and examples described below, and may be changed without departing from the scope and range of equivalents of the claims of the present invention.

[1. Molding catalyst]

[1.1. Requirement satisfied by molding catalyst]

A molding catalyst according to an embodiment of the present invention satisfies the following formula (1). When the molding catalyst satisfies the following formula (1), a difference in the packing state of the molding catalyst packed in a reaction tube is reduced. The difference in packing state can be evaluated by evaluating the variability of apparent specific gravity by a method described in Examples.

$$0.800 \leq W_{AV}/W_C \leq 0.875 \quad (1)$$

$W_{AV}/W_C$ is a ratio of the average weight ($W_{AV}$) of the molding catalyst to the virtual cylinder weight ($W_C$) of the molding catalyst. In this specification, the ratio $W_{AV}/W_C$ is sometimes described as a value A. The value A is an index that indicates the degree of rounding off of the edges of a cylindrical molding catalyst, and when the value A is smaller, the cylindrical molding catalyst has a smaller size due to rounding off of its edges.
The value A can be adjusted by, for example, controlling the degree of rounding off of the edges of a catalyst molded into a cylindrical shape in production of a molding catalyst. For example, the value A can be adjusted by processing a catalyst molded into a cylindrical shape in a kneader such as a non-bubbling kneader for an appropriate period of time. For example, the value A tends to be reduced by increasing the time of processing by the kneader. The value A tends to be increased by reducing the time of processing by the kneader.
Here, $W_{AV}$ is determined by the following formula (2).

$$W_{AV} = W_{tot}/n \quad (2)$$

In the formula (2), $W_{tot}$ is a total weight of freely-selected n pieces of the molding catalyst. Therefore, $W_{AV}$ means an average weight of the freely-selected n pieces of the molding catalyst.

$W_C$ is determined by the following formula (3).

$$W_C \; = \; (V_{AV} \cdot \rho) \, / \, (1 \; + \; V_P \cdot \rho) \quad (3)$$

In the formula (3), $V_{AV}$ is an average of volumes of virtual cylinders each respectively having, as its height and diameter, a major axis (L) and a minor axis (D) of each of the freely-selected n pieces of the molding catalyst. $\rho$ is a true density of the molding catalyst. $V_P$ is a pore volume per unit weight of the molding catalyst.

$W_C$ is a weight of a cylindrical catalyst having the same volume as the average volume of the n virtual cylinders assumed from the freely-selected n pieces of the molding catalyst.

The formula (3) is derived from the following formula.

$$(V_{AV} \; - \; V_P \cdot W_C) \cdot \rho \; = \; W_C$$

The molding catalyst of this embodiment has an almost cylindrical shape obtained by rounding off of the edges of a cylindrical shape. The minor axis (D) of the molding catalyst means the maximum diameter of the molding catalyst in the cross section perpendicular to the height direction (axial direction) of the almost cylindrical shape.

The major axis (L) of the molding catalyst means the length of the longest axis of the molding catalyst in the height direction (axial direction) of the almost cylindrical shape.

The major axis (L) and minor axis (D) of the molding catalyst can be measured using a conventionally-known vernier caliper or digimatic indicator. The measurement is performed on freely-selected n (usually n is 50 or more) samples.

The virtual cylinder is a cylinder assumed to have the major axis (L) and minor axis (D) of the molding catalyst as its height and bottom surface diameter, respectively.

$V_{AV}$ is an average of volumes of virtual cylinders each respectively having, as its height and diameter, the major axis (L) and the minor axis (D) of each of the freely-selected pieces of the molding catalyst.

The true density of the molding catalyst is a density determined by dividing the weight by the true volume (volume determined by subtracting the pore volume from the apparent volume of the molding catalyst) of the molding catalyst.

The true density ($\rho$) of the molding catalyst can be measured by a liquid-phase substitution method or a gasphase substitution method. Specifically, the true density ($\rho$) of the molding catalyst can be measured by a liquid-phase substitution method under conditions described in Examples.

The pore volume (Vp) per unit weight of the molding catalyst can be measured by a pore volume measuring apparatus (e.g., "Auto Pore III9420" manufactured by MICROMERITICS).

[1.2. Size of molding catalyst]

The size of the molding catalyst is not particularly limited, but the minor axis (D) of the molding catalyst is usually preferably 5 mm or less from the viewpoint of enhancing catalytic activity to further promote reaction. On the other hand, from the viewpoint of reducing pressure drop in a packed bed, the molding catalyst used in the present invention preferably has an appropriate size, and the minor axis (D) thereof is usually preferably 1 mm or more.

The major axis (L) of the molding catalyst is usually 1 mm or more and 10 mm or less, preferably 3 mm or more and 7 mm or less.

[1.3. Method for forming molding catalyst]

The molding catalyst according to the present invention is produced by, for example, a method in which a catalyst having a cylindrical shape is formed and then the edges of the cylindrical shape are rounded off.

Examples of a method for forming the catalyst having a cylindrical shape include extrusion molding and tablet compression. In the case of extrusion molding, an extruded product may be cut into pieces having an appropriate length before use. The catalyst having a cylindrical shape obtained here has edges. The edges of the cylindrical shape are edges formed by the bottom surface and side surface of the cylinder.

Then, the catalyst having a cylindrical shape is subjected to processing for rounding off (also referred to as chamfering) of edges using a rotary machine or the like.

The chamfering of edges of the catalyst can be performed by, for example, processing the catalyst at a given rotation speed for a given length of time using a non-bubbling kneader (NBK-1 manufactured by NIHONSEIKI KAISHA LTD.) The operation time of the non-bubbling kneader is preferably in the range of 10 minutes or longer and 150 minutes or shorter, more preferably in the range of 50 minutes or longer and 130 minutes or shorter from the viewpoint of production efficiency and chamfering effect. The rotation speed of the non-bubbling kneader is preferably in the range of 100 rpm or more and 2000 rpm or less, more preferably in the range of 200 rpm or more and 1000 rpm or less from the viewpoint of maintaining catalyst strength and the viewpoint of chamfering effect.

[1.4. Catalyst material for forming molding catalyst]

The molding catalyst may be formed from any catalyst material. The catalyst material molded to produce the molding catalyst according to the present invention may contain only a catalytic active component or may contain a catalytic active component and a carrier supporting the catalytic active component.

(Example (1) of catalyst material)

An example of the catalytic active component that may be contained in the catalyst material includes, but is not limited to, a known catalytic active component (1) for producing chlorine by oxidizing hydrogen chloride with oxygen by vapor-phase oxidation (e.g., a catalytic active component containing an element such as a copper element, a chromium element, or a ruthenium element).

An example of a catalyst containing a copper element includes a Deacon catalyst (catalyst containing copper chloride and potassium chloride and further containing various compounds).

An example of a catalyst containing al chromium element includes a catalyst containing chromium oxide (e.g., a catalyst described in JP-A-61-136902, JP-A-61-275104, JP-A-62-113701, JP-A-62-270405, or the like).

An example of a catalyst containing a ruthenium element includes a catalyst containing ruthenium oxide (e.g., a catalyst described in JP-A-9-67103, JP-A-10-338502, JP-A-2000-281314, JP-A-2002-79093, JP-A-2002-292279, or the like).

In the embodiment, the catalyst material molded to produce the molding catalyst is preferably a catalyst containing a ruthenium element, more preferably a catalyst containing ruthenium oxide. Here, ruthenium dioxide ($RuO_2$) having an oxidation number of +4 and ruthenium oxides having other oxidation numbers are present as ruthenium oxides. The catalyst may contain, as ruthenium oxides, various types of ruthenium oxides different in oxidation number. The catalyst containing ruthenium oxide preferably contains ruthenium dioxide ($RuO_2$) having an oxidation number of +4.

The catalyst may be a catalyst substantially containing only ruthenium oxide or a supported ruthenium oxide catalyst containing ruthenium oxide and a carrier supporting the ruthenium oxide. The catalyst is more preferably a supported ruthenium oxide catalyst because high activity can be obtained even when the content of ruthenium oxide is relatively small.

The supported ruthenium oxide catalyst is produced by, for example, a method in which a ruthenium compound is supported by a carrier and then calcined in an oxygen-containing gas atmosphere.

Examples of the carrier include an oxide (which may be a composite oxide) of an element selected from the group consisting of aluminum, silicon, titanium, zirconium, and niobium and activated carbon, and they may be used singly or in combination of two or more of them. Among them, at least one selected from the group consisting of alumina, silica, titanium oxide, and zirconium oxide is preferred, and titanium oxide having a rutile-type crystalline structure is more preferred as the carrier.

The weight ratio of ruthenium oxide/carrier in the supported ruthenium oxide catalyst is not particularly limited, but is preferably 0.1/99.9 to 20/80, more preferably 0.5/99.5 to 15/85. Such a weight ratio can be adjusted by controlling the ratio between the ruthenium compound and the carrier used in production of the supported ruthenium oxide catalyst. When the weight ratio is equal to or more than the above lower limit, sufficient catalytic activity is achieved. On the other hand, when the weight ratio is equal to or less than the above upper limit, a catalyst cost can be reduced.

The supported ruthenium oxide catalyst can suitably be used for vapor-phase oxidation for obtaining chlorine from hydrogen chloride and oxygen.

A molding catalyst formed from, for example, a catalyst material containing a catalytic active component for oxidizing a hydrogen halide with oxygen, such as a ruthenium oxide catalyst can be used as a molding catalyst for oxidizing a hydrogen halide with oxygen.

(Particularly preferred example of ruthenium oxide catalyst)

Hereinbelow, an example of a ruthenium oxide catalyst, in which ruthenium oxide is supported by a titania carrier, will be described in detail as a particularly preferred material of a molding catalyst for oxidizing a hydrogen halide with oxygen.

The titania carrier may be one made of rutile-type titania (titania having a rutile-type crystalline structure), anatase-type titania (titania having an anatase-type crystalline structure), amorphous titania, or the like or may be one made of a mixture of two or more of them. The titania carrier is preferably one made of rutile-type titania and/or anatase-type titania. Particularly, a titania carrier whose ratio of rutile-type titania to rutile-type titania and anatase-type titania (hereinafter sometimes referred to as a rutile-type titania ratio) is 50% or more is preferred, and a titania carrier having a rutile-type titania ratio of 70% or more is more preferred, and a titania carrier having a rutile-type titania ratio of 90% or more is even more preferred. When the rutile-type titania ratio is higher, thermal stability of a resulting supported ruthenium oxide tends to be higher so that catalytic activity further improves. The rutile-type titania ratio can be measured by X-ray diffractometry (hereinafter referred to as XRD) and is expressed by the following formula (a).

$$\text{Rutile-type titania ratio [\%]} = [IR/(IA + IR)] \times 100$$

(a)

IR: Intensity of diffraction line corresponding to (110) plane of rutile-type titania
IA: Intensity of diffraction line corresponding to (101) plane of anatase-type titania

It is to be noted that the content of sodium in the titania carrier is preferably 200 ppm by weight or less, and the content of calcium in the titania carrier is preferably 200 ppm by weight or less. Further, the content of all the alkali metal elements in the titania carrier is more preferably 200 ppm by weight or less, and the content of all the alkaline-earth metal elements in the titania carrier is more preferably 200 ppm by weight or less. The content of alkali metal elements or alkaline-earth metal elements can be measured by, for example, inductively coupled high-frequency plasma emission spectrometry (hereinafter sometimes referred to as ICP emission spectrometry), atomic absorption spectrometry, ion chromatography, or the like, and is preferably measured by ICP emission spectrometry. It is to be noted that the titania carrier may contain, in addition to titania, an oxide such as $\alpha$-alumina, silica, zirconia, or niobium oxide. It is preferred that the titania carrier contains substantially no alumina having a high specific surface area. If alumina having a high specific surface area is present in the titania carrier, there is a case where a sulfur component or an oxidized sulfur component is easily adsorbed and/or absorbed to the supported ruthenium oxide so that the activity of the catalyst reduces. It is to be noted that $\alpha$-alumina has a low BET specific surface area, and therefore adsorption and/or absorption of a sulfur component or an oxidized sulfur component is/are less likely to occur. That is, even when the carrier contains $\alpha$-alumina, the above-described problem is less likely to occur. Alumina having a high specific surface area is, for example, one having a specific surface area of 10 to 500 $m^2/g$, preferably 20 to 350 $m^2/g$. The specific surface area of alumina can be measured by a nitrogen absorption method (BET method), and is usually measured by a BET one-point method.

The specific surface area of the titania carrier can be measured by a nitrogen absorption method (BET method), and is usually measured by a BET one-point method. The specific surface area determined by such measurement is preferably 5 to 300 $m^2/g$, more preferably 5 to 50 $m^2/g$. If the specific surface area is too large, there is a case where the titania carrier or ruthenium oxide in a resulting supported ruthenium oxide is likely to be sintered so that thermal stability reduces. On the other hand, if the specific surface area is too small, there is a case where ruthenium oxide in a resulting supported ruthenium oxide is less likely to disperse so that catalytic activity reduces.

Ruthenium oxide is supported by the titania carrier described above. Support of ruthenium oxide by the titania carrier is performed, for example, in the following manner. The titania carrier is subjected to contact processing with a solution containing a ruthenium compound and a solvent and then dried until the content of the solvent becomes 0.10 to 15 wt% of the weight of the titania carrier. Then, the thus obtained dried product is kept in a state where it contains the solvent in an amount of 1.0 to 15 wt% of the weight of the titania carrier, and is then calcined in an oxidizing gas atmosphere.

Examples of the ruthenium compound include a halide such as $RuCl_3$ or $RuBr_3$, a halogeno acid salt such as $K_3RuCl_6$ or $K_2RuCl_6$, an oxo acid salt such as $K_2RuO_4$ or $Na_2RuO_4$, an oxyhalide such as $Ru_2OCl_4$, $Ru_2OCl_5$, or $Ru_2OCl_6$, a halogeno complex such as $K_2[RuCl_5(H_2O)4]$, $[RuCl_2(H_2O)4]Cl$, $K_2[Ru_2OCl_{10}]$, or $Cs_2[Ru_2OCl_4]$, an ammine complex such as $[Ru(NH_3)_5H_2O]Cl_2$, $[Ru(NH_3)_5Cl]Cl_2$, $[Ru(NH_3)_6]Cl_2$, $[Ru(NH_3)_6]Cl_3$, or $[Ru(NH_3)_6]Br_3$, a carbonyl complex such as $Ru(CO)_5$ or $Ru_3(CO)_{12}$, a carboxylato complex such as $[Ru_3O(OCOCH_3)_6(H_2O)_3]OCOCH_3$ or $[Ru_2(OCOR^1)4]Cl$ ($R^1$ = an alkyl group having 1 to 3 carbon atoms), a nitrosyl complex such as $K_2[RuCl_5(NO)]$, $[Ru(NH_3)_5(NO)]Cl_3$, $[Ru(OH)(NH_3)_4(NO)](NO_3)_2$, or $[Ru(NO)](NO_3)_3$, a phosphine complex, an amine complex, and an acetylacetonato complex. Among then, a halide is preferably used, and a chloride is particularly preferably used. It is to be noted that if necessary, a hydrate of the ruthenium compound or two or more of these ruthenium compounds may be used as the ruthenium compound.

The ratio between the titania carrier and the ruthenium compound used can appropriately be adjusted. For example, the ratio may appropriately be adjusted so that the weight ratio of ruthenium oxide/titania carrier in supported ruthenium oxide obtained after thecalcination described later is preferably 0.1/99.9 to 20.0/80.0, more preferably 0.3/99.7 to 10.0/90.0, even more preferably 0.5/99.5 to 5.0/95.0. If the amount of the ruthenium oxide is too small, there is a case where catalytic activity is not sufficient, and if the amount of the ruthenium oxide is too large, it is disadvantageous in terms of cost.

The titania carrier is subjected to contact processing with a solution containing a ruthenium compound and a solvent so that the ruthenium compound is supported by the titania carrier. Examples of the solvent used in the contact processing include water, an alcohol, and a nitrile, and two or more of them may be used if necessary. As the water, water having high purity, such as distilled water, deionized water, or ultrapure water, is preferred. If the water used contains a large amount of impurities, there is a case where the impurities are attached to the catalyst so that the activity of the catalyst reduces. Examples of the alcohol include alcohols having 1 to 6 carbon atoms, such as methanol, ethanol, n-propanol, isopropanol, hexanol, and cyclohexanol. Examples of the nitrile include nitriles having 1 to 6 carbon atoms, such as acetonitrile, propionitrile, and benzonitrile. The amount of the solvent contained in the solution is preferably 70 vol% or more of a volume determined by subtracting the volume of the ruthenium compound to be supported from the total pore volume of the titania carrier to be used. The upper limit of the amount of the solvent is not particularly limited, but if the amount of the solvent used is too large, the time required for drying tends to increase, and therefore the amount of the solvent used is preferably about 120 vol% or less. In the contact processing, the temperature during processing is usually 0 to 100°C, preferably 0 to 50 °C, and the pressure during processing is usually 0.1 to 1 MPa, preferably atmospheric pressure. Further, the contact processing can be performed in an air atmosphere or an inert gas atmosphere such as nitrogen, helium, argon, or oxide dioxide, and at this time, the contact processing may be performed in an atmosphere containing water vapor.

Examples of the contact processing include impregnation and immersion. Examples of a method for subjecting the titania carrier to contact processing with a solution containing a ruthenium compound and a solvent include a method (A) in which the titania carrier is impregnated with a solution containing a ruthenium compound and a solvent and a method (B) in which the titania carrier is immersed in a solution containing a ruthenium compound and a solvent, but the method (A) is preferred. The contact processing allows the ruthenium compound to be supported by the titania carrier. In the contact processing, the amount of the solvent used for the titania carrier is adjusted so that the content of the solvent in the titania carrier containing the ruthenium compound and the solvent obtained after the contact processing usually exceeds 15 wt% of the weight of the titania carrier.

After the titania carrier is subjected to contact processing with a solution containing a ruthenium compound and a solvent, the thus obtained titania carrier containing the ruthenium compound and the solvent is dried until the content of the solvent usually becomes 0.10 to 15 wt% of the weight of the titania carrier. In such drying, the temperature during drying is preferably 10°C to 100°C, and the pressure during drying is preferably 0.01 to 1 MPa, more preferably atmospheric pressure. The drying time is appropriately set. The drying can be performed in an air atmosphere or an inert gas atmosphere such as nitrogen, helium, argon, or oxide dioxide, and at this time, the drying may be performed in an atmosphere containing water vapor. Further, the drying may be performed in a stream of air, an inert gas, or a mixed gas of air and an inert gas, and at this time, the gas to be flowed may contain water vapor. When the drying is performed in a stream of a water vapor-containing gas, the concentration of water vapor in the water vapor-containing gas is usually set to be less than the amount of saturated vapor under drying conditions. When the drying is performed in a stream of a gas, the flow rate of the gas is preferably 10 to 10000/h, more preferably 100 to 5000/h under normal conditions (0°C, 0.1 MPa) in terms of the space velocity (GHSV) of the gas in the titania carrier. It is to be noted that the space velocity can be determined by dividing the amount of the gas passing through an apparatus for drying per hour (L/h) by the volume (L) of the titania carrier in the apparatus for drying.

The drying speed in the drying is appropriately set, but from the viewpoint of productivity, the drying speed is set so that the evaporation rate of the solvent per gram of the titania carrier is preferably 0.01 g/h or more, more preferably 0.02 g/h or more, even more preferably 0.03 g/h or more. The upper limit of the drying speed is appropriately set, but is set so that the evaporation rate of the solvent per gram of the titania carrier is preferably 0.50 g/h or less. Such a drying speed can be controlled by adjusting conditions such as temperature, pressure, time, and the gas flow rate, and such conditions may be changed during drying to change the drying speed.

The content of the solvent in a dried product obtained after the drying is usually 0.10 to 15 wt%, preferably 1.0 to 13 wt%, more preferably 2.0 to 7.0 wt% of the weight of the titania carrier. The content of the solvent in the dried product with respect to the weight of the titania carrier is calculated by the following formula (b) .

$$\text{Content of solvent in dried product with respect to}$$
$$\text{weight of titania carrier (wt\%) = [amount (g) of solvent}$$
$$\text{remaining in dried product] / [content (g) of titania}$$
$$\text{carrier in dried product]} \times 100 \quad \text{(b)}$$

It is to be noted that when the contact processing between the titania carrier and the solution containing a ruthenium compound and a solvent is performed by impregnation, the amount of the solvent remaining in the dried product can be determined by subtracting the amount of a change in weight before and after drying from the amount of the solvent used for the contact processing.

The drying is preferably performed with stirring. It is to be noted that drying with stirring means that the titania carrier containing the ruthenium compound and the solvent is dried not in a rest state but in a fluidized state. Examples of a method for the stirring include a method in which a drying container itself is rotated, a method in which a drying container itself is shaken, and a method in which stirring is performed using a stirrer provided in a drying container.

The thus obtained dried product is kept in a state where it usually contains the solvent in an amount of 1.0 to 15 wt% of the weight of the titania carrier. Such keeping is performed in a state where the evaporation of the solvent contained in the dried product is prevented, and the evaporation rate of the solvent is preferably less than 0.01 g/h, more preferably 0.001 g/h or less per gram of the titania carrier. During such keeping, the temperature is preferably 0 to 80°C, more preferably 5 to 50°C. The keeping time is appropriately set depending on the content of the solvent or the holding temperature, but is preferably 10 hours or longer, more preferably 15 hours or longer. Such keeping is preferably performed in a state where it contains the solvent in an amount of 1.0 to 15 wt% of the weight of the titania carrier, and may be performed under sealed conditions or open conditions or in a gas stream. The dried product may be kept in the same apparatus as used for drying or may be transferred to and kept in another container after drying.

When the content of the solvent becomes 0.10 wt% or more and less than 1.0 wt% of the weight of the titania carrier during the drying, it is preferred that before the above-described keeping, the content of the solvent in the dried product is adjusted to fall within the range of 1.0 to 15 wt% of the weight of the titania carrier by, for example, a method in which a gas containing the vaporized solvent is flowed to be brought into contact with the dried product or a method in which, when the solvent is water, the dried product is left to stand in the atmosphere.

After the above-described keeping, the dried product is usually calcined in an atmosphere of an oxidizing gas. Such calcination converts the supported ruthenium compound to ruthenium oxide so that supported ruthenium oxide is obtained in which ruthenium oxide is supported by the titania carrier. The oxidizing gas is a gas containing an oxidizing substance, and an example thereof includes an oxygen-containing gas. The oxygen concentration thereof is usually about 1 to 30 vol%. As the source of oxygen, air or pure oxygen is usually used, and is diluted with an inert gas or water vapor if necessary. As the oxidizing gas, air is particularly preferred. The calcination temperature is usually 100 to 500°C, preferably 200 to 400°C.

The calcination may be performed after the dried product is further dried after the above-described keeping until the content of the solvent in the dried product becomes less than 1.0 wt% of the weight of the titania carrier, or may be performed after reduction treatment is performed after the keeping, or may be performed after the dried product is further dried after the above-described keeping until the content of the solvent in the dried product becomes less than 1.0 wt% of the weight of the titania carrier and then subjected to reduction treatment. As a method for the drying, a conventionally-known method can be used, and the temperature during drying is usually room temperature to about 100°C, and the pressure during drying is usually 0.001 to 1 MPa, preferably atmospheric pressure. The drying can be performed in an air atmosphere or an inert gas atmosphere such as nitrogen, helium, argon, or oxide dioxide, and at this time, the drying may be performed in an inert gas atmosphere containing water vapor. Examples of the reduction treatment include those described in JP-A-2000-229239, JP-A-2000-254502, JP-A-2000-281314, and JP-A-2002-79093.

The oxidation number of ruthenium in ruthenium oxide supported in the supported ruthenium oxide obtained by calcination is usually +4, and the ruthenium oxide is usually in the form of ruthenium dioxide ($RuO_2$), but ruthenium having another oxidation number or ruthenium oxide in another form may be contained.

(Example (2) of catalyst material)

Another example of the catalytic active component that may be contained in the catalyst material is a catalytic active component (2) for obtaining methacrolein and further methacrylic acid from isobutylene and oxygen by vapor-phase oxidation (e.g., a catalytic active component containing an element such as a molybdenum element). Examples of a catalyst containing such a catalytic active component include oxidative catalysts described in JP-A-2000-351744, JP-A-2010-188276, JP-A-2003-10690, and JP-A-2007-260588, and these catalysts can be produced by conventionally-known methods (e.g., methods described in the above patent documents).

[2. Mode of use of molding catalyst]

[2.1. Suitable reactor]

The molding catalyst can be used in any reactor, but is preferably used by being packed in reaction tubes of a multitubular reactor because the effect of the molding catalyst according to the present invention is remarkably exhibited. Therefore, the molding catalyst is suitably used for a multitubular reactor, particularly a fixed-bed multitubular reactor.

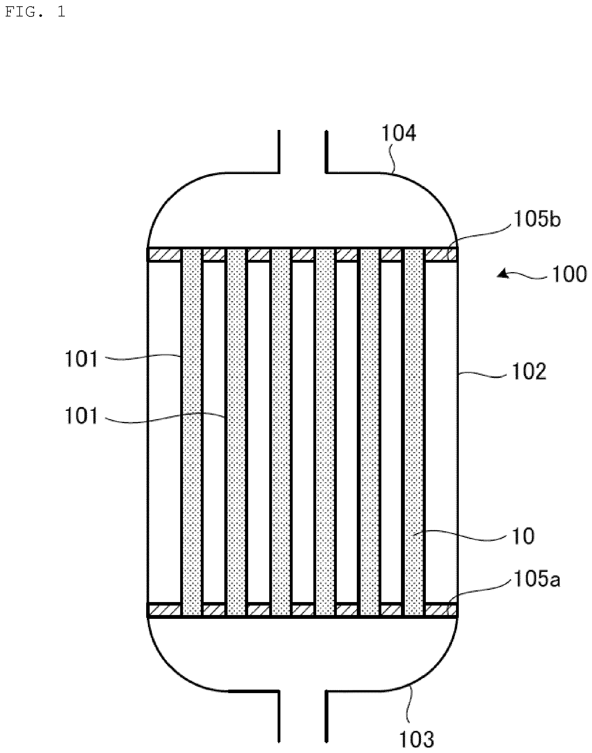

Here, the fixed-bed multitubular reactor to be used may be any conventionally-known reactor having a plurality of reaction tubes. Hereinbelow, an example of the fixed-bed multitubular reactor will be described with reference to the drawing. Fig. 1 is a schematic diagram showing an example of the fixed-bed multitubular reactor.

As shown in Fig. 1, a fixed-bed multitubular reactor 100 includes a plurality of reaction tubes 101, a cylindrical shell 102 in which the reaction tubes 101 are accommodated, a raw material introduction part 103 connected to the lower end of the shell 102 to introduce a raw material, a product collection part 104 connected to the upper end of the shell 102 to collect a product, a fixing member 105a to fix the bottom ends of the reaction tubes 101 to the shell 102, and a fixing member 105b to fix the upper ends of the reaction tubes 101 to the shell 102. When used, the fixed-bed multitubular reactor 100 is usually placed so that the axis of the shell 102 is substantially parallel to the vertical direction.

The reaction tubes 101 are fixed to the shell 102 so that their axial direction is substantially parallel to the axial direction of the shell 102. When the fixed-bed multitubular reactor 100 is used, the reaction tubes 101 are packed with a molding catalyst 10.

A heat medium is introduced into an area inside the shell 102 but outside the reaction tubes 101 so that reaction heat generated in the reaction tubes 101 can be removed by the heat medium. The fixed-bed multitubular reactor 100 may be of a disc-and-doughnut type, a segmental baffle type, or the like.

The reaction tubes 101 are tubes extending straight and having almost the same length and inner diameter. The top edges of the reaction tubes 101 are open, and the molding catalyst 10 to be used is fed through the openings.

In another embodiment, the reaction tubes may have a coil shape.

Hereinbelow, an example of a method for using the fixed-bed multitubular reactor 100 will be described.

The molding catalyst 10 (e.g., a catalyst formed using a supported ruthenium oxide catalyst as a material) is packed in the reaction tubes 101. A raw material (e.g., a gas containing hydrogen chloride and oxygen) is introduced through the raw material introduction part 103 and passed through the inside of the reaction tubes 101 packed with the molding catalyst 10. In the inside of the reaction tubes 101, reaction occurs through the contact of the raw material with the molding catalyst 10 so that the raw material is converted to a product (e.g., chlorine gas). The obtained product is collected by the product collection part 104 and is taken out to the outside of the fixed-bed multitubular reactor 100.

[2.2. Suitable intended use]

The molding catalyst may be used in any production method depending on the kind of catalytic active component contained therein. Particularly, a molding catalyst formed using the above-described supported ruthenium oxide catalyst as a material may suitably be used as a catalyst for obtaining a halogen by oxidation of a hydrogen halide with oxygen.

[3. Method for producing halogen using molding catalyst]

The above-described molding catalyst may be used in a method for producing a halogen (preferably chlorine). In the method for producing a halogen, the molding catalyst to be used is preferably one having catalytic activity to generate a halogen from a hydrogen halide and oxygen, and is more preferably one formed from the catalyst material described in the section [1. Molding catalyst] (Example (1) of catalyst material).

A method for producing a halogen according to an embodiment of the present invention includes the step of obtaining a halogen using the molding catalyst. Hereinbelow, the production method of this embodiment will be described with reference to a case where chlorine is produced as a halogen.

In the production method of this embodiment, hydrogen chloride is oxidized by supplying hydrogen chloride and oxygen to each of reaction tubes of a fixed-bed multitubular reactor. The fixed-bed multitubular reactor to be used is not particularly limited but may be one described above in the section [2. Mode of use of molding catalyst]. Each of the reaction tubes is packed with the molding catalyst, and a gas containing hydrogen chloride and a gas containing oxygen are flowed through a bed of the molding catalyst packed in each of the reaction tubes (packed catalyst bed) to oxidize the hydrogen chloride.

The gas containing hydrogen chloride is not particularly limited, and examples thereof include various gases containing hydrogen chloride, such as a gas generated by reaction between hydrogen and chlorine, a gas generated by heating hydrochloric acid, a gas generated by the thermolysis reaction or burning reaction of a chlorine compound, a gas generated as a by-product in production of any kind of compound (e.g., the carbonylation reaction of an organic compound by phosgene, the chlorination reaction of an organic compound by chlorine, the production reaction of a chlorofluoroalkane), and combustion exhaust gas generated from an incinerator.

The concentration of hydrogen chloride in the gas containing hydrogen chloride is preferably 10 vol% or more, more preferably 50 vol% or more, even more preferably 80 vol% or more and is usually 100 vol% or less. When the concentration of hydrogen chloride is equal to or more than the above lower limit, production efficiency improves and reaction operations, such as separation of generated chlorine and recycling of unreacted oxygen performed if necessary, can easily be performed.

The gas containing hydrogen chloride may contain impurities such as an unreacted raw material and a reaction product in reaction for generating the gas. However, the concentration of the impurities is preferably at a level such that the concentration of hydrogen chloride in the gas falls within the above preferred range.

The gas containing hydrogen chloride may contain another gas such as water vapor or an inert gas. However, the concentration of the another gas such as water vapor or an inert gas is preferably at a level such that the concentration of hydrogen chloride in the gas falls within the above preferred range. The gas containing hydrogen chloride preferably contains water vapor because temperature distribution in the packed catalyst bed can be smoothed out.

As the gas containing oxygen, air or pure oxygen may be used.

The method for producing a halogen of this embodiment may include any step in addition to the step of obtaining a halogen using the molding catalyst. For example, the method for producing a halogen of this embodiment may include the step of packing the molding catalyst into a reactor, the step of transferring a halogen generated in the reactor, and the like.

EXAMPLES

Hereinbelow, the present invention will be described with reference to Examples, but the present invention is not limited thereto. In the following description, "part(s)" means "part(s) by weight". It is to be noted that the physical properties etc. of molding catalysts used were measured and calculated by the following methods.

<Major axis (L) of molding catalyst>

The major axes (L) of freely-selected 50 pieces of a molding catalyst were measured with a digital vernier caliper.

<Minor axis (D) of molding catalyst>

The minor axes (D) of the freely-selected 50 pieces of the molding catalyst were measured with a digital vernier caliper.

<Average weight ($W_{AV}$) of molding catalyst>

The weight of the freely-selected 50 pieces of the molding catalyst was precisely measured and divided by 50 to calculate $W_{AV}$.

<Average volume ($V_{AV}$) of virtual cylinder>

The volume V of each virtual cylinder was determined from the major axis (L) and minor axis (D) of each of the freely-selected 50 pieces of the molding catalyst using the following formula, and the sum of volumes of all the virtual cylinders (= $W_{tot}$) was divided by 50 to calculate $V_{AV}$.

$$\text{Formula:} \quad V = (D/2)^2 \cdot \pi \cdot L$$

<True density ($\rho$) of molding catalyst>

The true density of the molding catalyst was measured by a liquid-phase substitution method using a picnometer. As a dispersion medium, butanol was used. Before the measurement, the molding catalyst was dried at 105°C for 2 hours in an air atmosphere. The measurement was performed at 25°C using a picnometer (specific gravity bottle with side tubulure, 40 mL). As a result of the measurement, the molding catalysts used in Examples and Comparative Examples had a true density $\rho$ of 4.193 g/cm$^3$.

<Pore volume ($V_P$) per unit weight of molding catalyst>

First, 0.6 to 1.2 g of the catalyst to be measured was weighed out and dried at 110°C for 4 hours in a drier, and then the weight of the dried catalyst as a sample was precisely measured. This sample was set in a cell of a pore volume measuring apparatus ("Auto Pore III9420" manufactured by MICROMERITICS), the pressure in the cell system was adjusted to 50 pmHg or less, and the cell system was then filled with mercury. Then, the pressure applied to the cell was gradually increased, and the amount of intruded mercury was measured at each pressure, provided that a waiting time for equilibrium of intruded mercury was 10 seconds. Then, the total amount of intruded mercury (mL) when the pressure applied was increased from 0.007 MPa to 207 MPa was divided by the weight of the sample (g) to determine the amount of intruded mercury per gram of the sample as a pore volume per unit weight (mL/g). The molding catalysts used in Examples and Comparative Examples had a $V_p$ of 0.20 mL/g.

<Variability of apparent specific gravity>

As a sample, about 80 to 100 g of the molding catalyst to be measured was precisely weighed out. All the sample was dropped in the center of a 100 cc measuring cylinder from a funnel placed above the measuring cylinder within 3 seconds. Then, the top surface of the catalyst in the measuring cylinder was leveled off to read the volume of the catalyst, and the weight (g) of the sample was divided by the volume (cc) read off to calculate an apparent specific gravity (g/cc). The measurement of apparent specific gravity was repeated 10 times, and an unbiased estimate of variance determined from the obtained results was regarded as variability of apparent specific gravity.

<Chamfering of catalyst>

The chamfering of the catalyst was performed by processing the catalyst at a predetermined rotation speed for a predetermined length of time using a non-bubbling kneader (NBK-1 manufactured by NIHONSEIKI KAISHA LTD.)

[Example 1]

<Preparation of titanium oxide compact>

First, 100 parts of titania powder [F-1R manufactured by Showa Titanium Co., Ltd., rutile-type titania ratio 93%] and 2 parts of an organic binder [YB-152A manufactured by YUKEN INDUSTRY CO., LTD.] were mixed. Then, 29 parts of pure water and 12.5 parts of titania sol [CSB manufactured by Sakai Chemical Industry Co., Ltd., titania content 40%] were added, and the mixture was kneaded. This mixture was extruded into noodle-like bodies having a diameter of 3.0 mm$\varphi$ and dried at 60°C for 2 hours. Then, the noodle-like bodies were crushed into pieces having a length of about 3 to 5 mm. The obtained compacts were heated from room temperature to 600°C for 1.7 hours in air and then calcined by being maintained at the same temperature for 3 hours to obtain white titanium oxide (titania) compacts.

<Chamfering and measurement of apparent specific gravity>

As a sample, 100 g of the titanium oxide compacts was precisely weighed out. The sample was placed in a sample container of a non-bubbling kneader, and the non-bubbling kneader was operated at a rotation speed of 500 rpm for 52 minutes. The obtained compacts (molding catalyst) were subjected to sieving (opening of sieve: 1.4 mm, wire diameter: 0.71 mm). The compacts (molding catalyst) after sieving were precisely weighed and found to have a weight of 95.1 g. Fifty compacts (molding catalyst) after sieving were freely selected and precisely weighed, and as a result, the weight thereof was 3.2602 g and $W_{AV}$ was 0.0652 g. $V_{AV}$, $W_C$, and A calculated from the measurement results of the major axes (L) and minor axes (D) of the freely-selected 50 compacts were 0.0332 mL, 0.0754 g, and 0.865, respectively. Further, the apparent specific gravity of the molding catalyst after sieving was measured 10 times, and the variability of apparent specific gravity determined from the measurement results was 0.00002. The results are shown in Table 1.

[Example 2]

Example 2 was the same as Example 1 except that the operation time of the non-bubbling kneader was changed to 87 minutes. As a result, the weight of the compacts (molding catalyst) after sieving was 90.1 g, the weight of freely-selected 50 compacts (molding catalyst) after sieving determined by precise weighing was 3.1650 g, $W_{AV}$ = 0.0633 g,

$V_{AV}$ = 0.0338 mL, $W_C$ = 0.0769 g, A = 0.823, and the variability of apparent specific gravity of the molding catalyst after sieving was 0.00004. The results are shown in Table 1.

[Example 3]

Example 3 was the same as Example 1 except that the operation time of the non-bubbling kneader was changed to 127 minutes. As a result, the weight of the compacts (molding catalyst) after sieving was 84.9 g, the weight of freely-selected 50 compacts (molding catalyst) after sieving determined by precise weighing was 2.9746 g, $W_{AV}$ = 0.0595 g, $V_{AV}$ = 0.0320 mL, $W_C$ = 0.0727 g, A = 0.818, and the variability of apparent specific gravity of the molding catalyst after sieving was 0.00001. The results are shown in Table 1.

[Example 4]

Example 4 was the same as Example 1 except that the operation time of the non-bubbling kneader was changed to 24 minutes. As a result, the weight of the compacts (molding catalyst) after sieving was 98.0 g, the weight of freely-selected 50 compacts (molding catalyst) after sieving determined by precise weighing was 3.4262 g, $W_{AV}$ = 0.0685 g, $V_{AV}$ = 0.0346 mL, $W_C$ = 0.0786 g, A = 0.872, and the variability of apparent specific gravity of the molding catalyst after sieving was 0.00013. The results are shown in Table 1.

[Comparative Example 1]

Comparative Example 1 was the same as Example 1 except that the operation time of the non-bubbling kneader was changed to 20 minutes. As a result, the weight of the compacts (molding catalyst) after sieving was 98.5 g, the weight of freely-selected 50 compacts (molding catalyst) after sieving determined by precise weighing was 3.3633 g, $W_{AV}$ = 0.0673 g, $V_{AV}$ = 0.0337 mL, $W_C$ = 0.0766 g, A = 0.878, and the variability of apparent specific gravity of the molding catalyst after sieving was 0.00024. The results are shown in Table 1.

[Comparative Example 2]

Comparative Example 2 was the same as Example 1 except that the operation time of the non-bubbling kneader was changed to 158 minutes. As a result, the weight of the compacts (molding catalyst) after sieving was 80.0 g, the weight of freely-selected 50 compacts (molding catalyst) after sieving determined by precise weighing was 2.8625 g, $W_{AV}$ = 0.0573 g, $V_{AV}$ = 0.0319 mL, $W_C$ = 0.0725 g, A = 0.789, and the variability of apparent specific gravity of the molding catalyst after sieving was 0.00018. The results are shown in Table 1.

[Table 1]

Table 1

| | Example 1 | Example 2 | Example 3 | Example 4 | Comparative Example 1 | Comparative Example 2 |
|---|---|---|---|---|---|---|
| Operation time (min) of non-bubbling kneader | 52 | 87 | 127 | 24 | 20 | 158 |
| $V_{AV}$ (mL) | 0.0332 | 0.0338 | 0.0320 | 0.0346 | 0.0337 | 0.0319 |
| $W_{AV}$ (g) | 0.0652 | 0.0633 | 0.0595 | 0.0685 | 0.0673 | 0.0573 |
| $W_C$ (g) | 0.0754 | 0.0769 | 0.0727 | 0.0786 | 0.0766 | 0.0725 |
| A | 0.865 | 0.823 | 0.818 | 0.872 | 0.878 | 0.789 |
| Variability of apparent specific gravity | 0.00002 | 0.00004 | 0.00001 | 0.00013 | 0.00024 | 0.00018 |

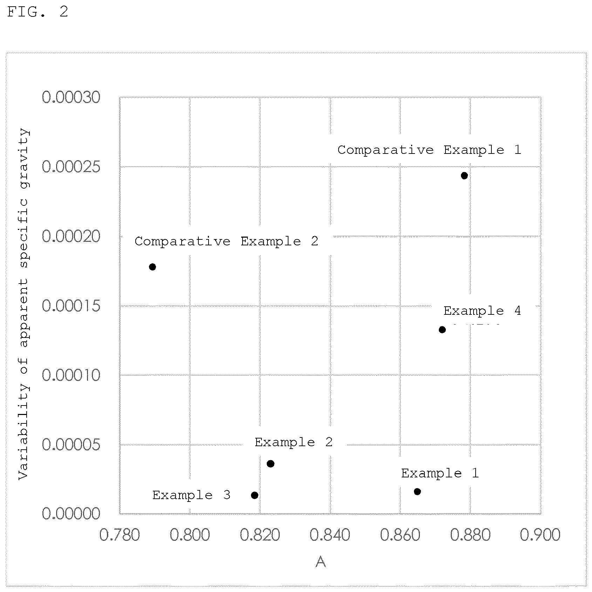

Fig. 2 shows the variability of apparent specific gravity of Examples and Comparative Examples plotted against the value A. Fig. 2 is a graph showing the relationship between the value A and the variability of apparent specific gravity of Examples and Comparative Examples.

As can be seen from the above results, the variability of apparent specific gravity of the molding catalysts of Examples satisfying the formula (1) is remarkably smaller than that of the molding catalysts of Comparative Examples.

In Examples, titanium oxide (titania) was used as a material for forming a molding catalyst. However, molding catalysts having various catalytic activities and capable of reducing a difference in packing state when packed into a reaction tube can be obtained by using, as a material for forming a molding catalyst, other various materials containing a component having catalytic activity (e.g., a ruthenium oxide catalyst in which ruthenium oxide is supported by a titania carrier).

DESCRIPTION OF REFERENCE SIGNS

| 10 | Molding catalyst |
| 100 | Fixed-bed multitubular reactor |
| 101 | Reaction tube |
| 102 | Shell |
| 103 | Raw material introduction part |
| 104 | Product collection part |
| 105a, 105b | Fixing member |

**Claims**

1. A molding catalyst satisfying the following formula (1):

$$0.800 \leq W_{AV}/W_C \leq 0.875 \quad (1)$$

   wherein $W_{AV}$ is determined by the following formula (2) and $W_C$ is determined by the following formula (3):

$$W_{AV} = W_{tot}/n \quad (2)$$

   wherein $W_{tot}$ is a total weight of freely-selected n pieces of the molding catalyst,

$$W_C = (V_{AV} \cdot \rho)/(1 + V_P \cdot \rho) \quad (3)$$

   wherein $V_{AV}$ is an average of volumes of virtual cylinders each respectively having, as its height and diameter, a major axis (L) and a minor axis (D) of each of the freely-selected n pieces of the molding catalyst,
   $\rho$ is a true density of the molding catalyst, and
   $V_P$ is a pore volume per unit weight of the molding catalyst.

2. The molding catalyst according to claim 1, which is intended to be used for a multitubular reactor.

3. The molding catalyst according to claim 1 or 2, which is used to oxidize a hydrogen halide with oxygen.

4. A method for producing a halogen, comprising obtaining a halogen using the molding catalyst according to any one of claims 1 to 3.

FIG. 1

FIG. 2

| | **INTERNATIONAL SEARCH REPORT** | International application No. |
|---|---|---|
| | | PCT/JP2021/003003 |

**A. CLASSIFICATION OF SUBJECT MATTER**
B01J 35/02(2006.01)i; B01J 21/06(2006.01)i; B01J 23/46(2006.01)i; B01J
32/00(2006.01)i; C01B 7 /01 (2006. 01) i
FI: B01J35/02 301D; C01B7/01 A; B01J32/00; B01J23/46 301M; B01J21/06 M

According to International Patent Classification (IPC) or to both national classification and IPC

**B. FIELDS SEARCHED**

Minimum documentation searched (classification system followed by classification symbols)
B01J21/00-38/74; C01B7/01; B01J8/02-8/06

Documentation searched other than minimum documentation to the extent that such documents are included in the fields searched
Published examined utility model applications of Japan       1922–1996
Published unexamined utility model applications of Japan     1971–2021
Registered utility model specifications of Japan             1996–2021
Published registered utility model applications of Japan     1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 1-228940 A (HOECHST AG.) 12 September 1989<br>(1989-09-12) claims, page 3, upper left column,<br>line 6 to upper right column, line 4, page 5,<br>upper right column, lines 1-6, page 5, lower left<br>column, lines 2-16, page 5, lower right column,<br>tables, fig. 1 | 1<br>2-4 |
| Y | JP 2010-52976 A (SUMITOMO CHEMICAL CO., LTD.) 11<br>March 2010 (2010-03-11) claims, paragraphs [0018],<br>[0028] | 2-4 |
| A | CN 102909085 A (ANHUI POLYTECHNIC UNIVERSITY) 06<br>February 2013 (2013-02-06) claims 1-4, table 1,<br>fig. 1, 2 | 1-4 |
| A | JP 2005-144322 A (NIPPON SHOKUBAI CO., LTD.) 09<br>June 2005 (2005-06-09) paragraph [0016], fig. 1(c) | 1-4 |

☐ Further documents are listed in the continuation of Box C.          ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 March 2021 (24.03.2021) | 06 April 2021 (06.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/003003

| Patent Documents referred in the Report | Publication Date | Patent Family | Publication Date |
|---|---|---|---|
| JP 1-228940 A | 12 Sep. 1989 | US 4902823 A<br>claims 1-3, column 2, line 45 to column 3, line 2, column 5, lines 45-55, column 6, lines 12-29, column 6, tables, fig. 1<br>EP 330853 A2 | |
| JP 2010-52976 A | 11 Mar. 2010 | US 2011/0158897 A1<br>claims 1-4, paragraphs [0025], [0040]<br>WO 2010/024461 A1<br>EP 2327660 A1<br>CN 102196990 A | |
| CN 102909085 A | 06 Feb. 2013 | (Family: none) | |
| JP 2005-144322 A | 09 Jun. 2005 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010052976 A
- JP 61136902 A
- JP 61275104 A
- JP 62113701 A
- JP 62270405 A
- JP 9067103 A
- JP 10338502 A
- JP 2000281314 A

- JP 2002079093 A
- JP 2002292279 A
- JP 2000229239 A
- JP 2000254502 A
- JP 2000351744 A
- JP 2010188276 A
- JP 2003010690 A
- JP 2007260588 A